# EUROPEAN PATENT SPECIFICATION

(11) **EP 1 927 640 B1**
(45) Date of publication and mention of the grant of the patent: **12.08.2009**
(21) Application number: 06024854.9
(22) Date of filing: 30.11.2006
(51) Int. Cl.: C09K 19/54

(54) **A method of preparing a polymer dispersed liquid crystal**
Verfahren zur Herstellung eines polymer-dispergierten Flüssigkristalls
Procédé de préparation de cristaux liquides dispersés dans un polymère

(43) Date of publication of application: 04.06.2008
(73) Proprietor: SONY DEUTSCHLAND GMBH, 10785 Berlin (DE)
(72) Inventor: Masutani, Akira, Hedelfinger Str. 61 70327 Stuttgart (DE); Roberts, Anthony, Hedelfinger Str. 61 70327 Stuttgart (DE); Kilickiran, Pinar, Hedelfinger Str. 61 70327 Stuttgart (DE); Nelles, Gabriele, Hedelfinger Str. 61 70327 Stuttgart (DE); Yasuda, Akio, Hedelfinger Str. 61 70327 Stuttgart (DE)
(74) Representative: Appelt, Christian W.

(56) References cited:
- EP-A- 1 610 170
- EP-A1- 0 520 800
- WO-A-03/006575
- WO-A-20/06101961
- WO-A1-03/050202

## Description

The present invention relates to a method of preparing a polymer dispersed liquid crystal, to a method of producing a polymer dispersed liquid crystal cell, to a polymer dispersed liquid crystal and polymer dispersed liquid crystal cell, respectively, produced by such method, to a liquid crystal display containing a plurality of such polymer dispersed liquid crystal cells and to the use of particles for preparing a polymer dispersed liquid crystal.

Reflective displays usually have a light diffusing back plane or a gain reflector in order to maximize the use of surrounding light. They rely on ambient light for information display and hence are ideal to devices for portable electronic equipment, since the need for backlight illumination is obviated. Nevertheless, reflective displays suffer from inherent difficulties in producing high contrast and high colour images with adequate resolution. There are a number of reflective display technologies, incorporating different modes, for example transmission mode (such as TN display), absorption mode (such as guest host display), selective reflection mode (such as cholesteric LCD mode), and scattering mode (such as polymer dispersed liquid crystals). In all of these, the light diffusion properties of the reflective back plane are limited, which means that the viewing angle of the display is narrow. Furthermore, there is a metal-like glare (specular reflection) from the back plane of the display due to the interference of the reflected light. One way of approaching this problem has been to introduce surface irregularities onto the reflective back plane, also referred to as protuberances or microreflective structures. By modifying the height, size and/or location of these protuberances researchers have tried to tailor the light diffusion from the reflecting back plane to optimise the display performance for the viewer. Various methods exist in order to create such protuberances. For example protuberances can be made by using a stamping method. However, if, for some reason, the diffusion properties are to be changed, the stamp must be redesigned, or a completely new stamp must be used. Another method for producing protuberances is photolithography. Again, if the diffusion properties are to be changed, the lithography mask and/or lamp must be redesigned. Consequently, the optimization/redesign of protuberances require considerable resources in terms of time, finances and logistics.

A polymer dispersed liquid crystal cell is composed of a polymer matrix between two substrates, such as glass and a diffuse reflector, within which matrix small droplets or an interstitial network of a liquid crystal (LC) are dispersed. By doping polymer dispersed liquid crystal cells (PDLC) with dichroic dyes, the films exhibit an absorbing off-state and a transparent on-state.

Such film, known as dichroic PDLC (D-PDLC), have the potential to outperform conventional reflective-typed twisted nematic (TN) LC displays in some applications since they do not require the presence of polarizers, thus leading to an increased reflectivity and viewing angle.

Previously, the present inventors had developed a simple processing method to overcome the fabrication problems associated with a polymerization-induced phase separation (PIPS) method; in general, it is difficult to construct a dye-based PDLC film from a UV-cured phase separation process, due to the interruption of the polymerization by the dye and the possible degradation of the dye by the UV-radiation. In the method that had previsouly been devised by the present inventors, the produced polymer phase is infiltrated/backfilled with a liquid crystal (see WO 03/050202 and WO 03/050203), which therefore is not subject to any limitations imposed by the polymerization procedure, thus facilitating the use of UV-sensitive dyes.

Furthermore, in previous attempts, the present inventors used a reflective display involving such dye-doped or dichroic polymer dispersed liquid crystal cells (D-PDLC), in which the reflective display had a diffusing backplane, or gain reflector, in order to maximize the use of the surrounding light. The diffusion properties could be controlled mainly by modifying the shape, height and size of the protuberances on such a backplane, but this requires facilities, time and financial investment. The inventors furthermore realized a paper-like appearance by employing an additional diffuse layer using a particle film on the reflective backplane (see EP 1 610 170 A1). To a certain extent, this suppressed the reflector's metallic glare and increased the viewing angle. Furthermore, it could be shown that in so doing the amount of diffusion could be controlled, the specular glare reduced, and the Lambertian reflectance enhanced (Masutani et al., Proc. Asia Display/IMID (2004) and EP 1610170 A1). However, the production of such a diffuse layer required high temperatures such as temperatures of around 180°C and a solvent,, either of which for example may damage a heat-sensitive backplane.

WO 2006/101961 describes a display comprising at least one substrate, at least one electrically conductive layer and at least one electronically modulated imaging layer, wherein the electronically modulated imaging layer comprises a self-assembled, close-packed, ordered monolayer of domains of electrically modulated material in a random coil fixed polymer matrix and filler, the polymer matrix having been dried at a temperature above the sol-gel transition temperature.

EP 0 520 800 A1 describes liquid crystal display elements, comprising a pair of substrates and a film held between the substrates, wherein the film is prepared by dispersing liquid crystal material in a polymer matrix material, and wherein the ratio of resistivity of the liquid crystal material to the resistivity of the polymer matrix material falls within a range of 1 and 10⁵. The polymer matrix material can contain electrically conductive fine particles, which are made of a material selected from the group consisting of metal, carbon, metal oxide, charge-transfer complex, and organic electrolyte, and which have an average particle diameter falling within a range of between 0.01 µm and 3 µm. The design of the liquid crystal display elements of EP 0 520 800 A1 permits manufacturing polymer dispersion type liquid crystal display elements, which exhibit a high response speed, which can be operated with a low driving voltage, and which permit a high contrast.

WO 03/006575 A1 describes anisotropic composites comprising a mixture of a) an anisotropic oriented polymeric network with one or more binding moieties obtainable from a liquid crystalline monomer or a liquid crystalline mixture of monomers, at least one of the monomers comprising a polymerizable group selected from acrylate, epoxy, oxetane, vinyl ether, and thiolene, and b) an inorganic material (which is a conductor or a non-conductor), **characterized in that** the network has an order parameter S greater than 0.01 and in that the inorganic material is a substantially water-insoluble inorganic salt, a free metal particle, or a mixture thereof. The anisotropic composites of WO 03/006575 A1 can be comprised in optical devices.

Accordingly, it was an object of the present invention to provide for an improved method of modifying and/or controlling the diffusing properties of a backplane reflector without having to modify protuberances present on the backplane themselves. It was also an object of the present invention to provide for a method allowing the production of a display with reduced glare and reduce viewing angle dependency of optical properties, without having to rely on an additional diffuse layer. It was also an object of the present invention to provide for a method of fabricating a liquid crystal display that allows the use of a wider choice of backplanes, such as flexible and/or solvent/heat-sensitive organic thin film transistors (TFTs). All these objects are solved by a method of preparing a polymer dispersed liquid crystal, said method comprising the steps:
a) providing, in any order,
   - particles having an average size in the range from 1 nm to 5 µm, and
   - a composition containing a material capable of forming a polymer, said composition further containing a first liquid crystal material,
b) mixing said particles and said composition,
c) inducing said composition to form a polymer, preferably by polymerization induced phase separation (PIPS), thermal induced phase separation (TIPS) or solvent induced phase separation (SIPS), more preferably inducing said composition to undergo polymerization by chemical reaction, even more preferably a polymerization by chemical reaction which is photo-induced,
   thereby obtaining a porous polymer matrix having said particles embedded therein, said matrix furthermore having pores which are occupied by said first liquid crystal material,
characterized in that said particles are electrically non-conducting.

In one embodiment occurs by polymerization induced phase separation (PIPS), and said material capable of forming a polymer comprises polymer-precursors, preferably monomers and/or oligomers.

In one embodiment said particles are chemically inert, wherein, preferably said particles are chemically inert to metals, liquid crystal materials, polymers, dyes and transparent conductive oxides, and wherein, more preferably, said particles are chemically inert to metals, liquid crystal materials, polymers, dyes and transparent conductive oxides such as are encountered in a polymer dispersed liquid crystal cell.

In one embodiment said particles are single particles, wherein, preferably, said particles have an average size in the range from 1 nm to < 5000 nm, more preferably 100 nm to < 3000 nm, even more preferably from 200 nm to 800 nm, and most preferably in the wavelength range of visible light.

In anther embodiment said particles are particle aggregates, wherein, preferably, said particle aggregates have an average size in the range from 1 nm to < 5000 nm, more preferably 100 nm to < 3000 nm, even more preferably from 200 nm to 800 nm, and most preferably in the wavelength range of visible light.

In one embodiment said particles are made of or coated with a material selected from heat resistant polymers selected from crosslinked silicone resin, crosslinked polystyrene, crosslinked acrylic resin, PMMA, melamine-formaldehyde resin, aromatic polyamide resin, polyimide resin, polyamide-imide resin, crosslinked polyesters, fluorinated polymers (e.g. TEFLON^{®}), metal oxides, such as aluminium oxide, silicon dioxide, e.g. silica, glass, preferably glass beads and carbon, such as diamond, wherein, preferably, said particles are made of or coated with a heat resistant polymer selected from crosslinked silicone resin, crosslinked polystyrene, crosslinked acrylic resin, melamine-formaldehyde resin, aromatic polyamide resin, polyimide resin, polyamide-imide resin, crosslinked polyester, aluminium oxide, silicon dioxide, diamond and mixtures of any of the foregoing.

In one embodiment said particles are mixed with said composition in step b) at a concentration in the range of from 0.1 wt.% to 20 wt.%, preferably from 1 wt.% to 10 wt.%, with reference to the weight of the composition. The "wt.%-values " given in this context refer to the weight of the composition after mixing.

The objects of the present invention are also solved by a method of producing a polymer dispersed liquid crystal cell, said method comprising the steps:
A) performing the above method according to the present invention (i.e. the method of preparing a polymer dispersed liquid crystal) by placing the product of step b) between a first and a second substrate, and performing step c) to obtain a porous polymer matrix between said first and second substrate, said porous polymer matrix having said particles embedded therein and furthermore having pores which are occupied by said first liquid crystal material,
B) lifting off said second substrate from a face of said porous polymer matrix,
C) removing said first liquid crystal material, from said porous polymer matrix and replacing it by a second liquid crystal material
D) placing a third substrate on said face of said porous polymer matrix from which face said second substrate had been lifted off in step B),
thereby obtaining a polymer dispersed liquid crystal cell.

In one embodiment the method according to the present invention, comprises the further step:
E) heating said polymer dispersed liquid crystal cell to a temperature in the range from 30°C to 200°C for a period in the range from 5s to 3h.

Preferably, in step E), said polymer dispersed liquid crystal cell is heated to a temperature in the range from 30°C to 120°C, more preferably from 75°C to 90°C, and even more preferably from 80°C to 85°C, wherein, more preferably, step E) is performed for a period of 5 s to 60 min, preferably for a period of 10 min to 40 min.

In one embodiment steps C) and D) occur in the order CD or DC or concomitantly with each other.

In one embodiment step C) is performed by removing said first liquid crystal material, from said porous polymer matrix by a process selected from washing out, sucking and evaporating, and adding said second liquid crystal material to said porous polymer matrix by a process selected from imbibing said second liquid crystal material into said porous polymer matrix, flooding said porous polymer matrix with said second liquid crystal material, immersing said porous polymer matrix into said second liquid crystal material, capillary force filling said porous polymer matrix with said second liquid crystal material under vacuum, and drop casting said second liquid crystal material on said porous polymer matrix.

Preferably, said second liquid crystal material is dye-doped.

In one embodiment said polymer dispersed liquid crystal cell is a transmissive cell and both said first and third substrates are transparent, such as glass coated with a transparent conductive oxide (TCO), e.g. indium tin oxide (ITO), fluorine doped tin oxide (FTO), zinc oxide (ZnO).

In another embodiment said polymer dispersed liquid crystal cell is a reflective cell and one of said first and third substrates is reflective or partially reflective, such as glass coated with metal, and the other of said first and third substrates is transparent.

The objects of the present invention are also solved by a polymer dispersed liquid crystal prepared by the method according to the present invention.

The objects of the present invention are also solved by a polymer dispersed liquid crystal cell produced by the method according to the present invention.

In one embodiment the polymer dispersed liquid crystal cell according to the present invention, additionally comprises spacers arranged between said first substrate and said third substrate to keep said first and third substrate apart.

Preferably, said spacers are made from polymer(s) or glass.

The objects of the present invention are also solved by a a liquid crystal display containing at least two polymer dispersed liquid crystal cells as defined above.

The objects of the present invention are also solved by the use of particles as above for preparing a polymer dispersed liquid crystal having a porous polymer matrix with said particles embedded therein, said matrix having pores which are occupied by a liquid crystal material, characterized in that said particles are added to a composition containing a material capable of forming a polymer, said composition further containing a liquid crystal material, and, after addition of said particles, said composition is induced to form a polymer, preferably by polymerization induced phase separation (PIPS), thermal induced phase separation (TIPS) or solvent induced phase separation (SIPS), wherein, more preferably said composition is induced to undergo polymerization by chemical reaction, even more preferably a polymerization by chemical reaction which is photo-induced,
thereby obtaining said polymer dispersed liquid crystal.

As used herein, the term polymer dispersed liquid crystal (PDLC) is meant to refer to a composite comprising a polymer matrix within which small droplets or an interstitial network of liquid crystal (LC) are dispersed. Methods for producing such PDLC are known to the person skilled in the art and are for example described in US-Patent 4,435,047 and 4,596,445. In an improved method of producing such PDLC, the polymer matrix after formation is filled with a second liquid crystal material which replaces a first liquid (crystal) material. This allows the use of liquid crystal materials that would otherwise be damaged in the polymer matrix formation process. Such improved methods are e.g. described in WO 03/05203, WO 03/050202 and EP 1693698 A1.

Unless indicated otherwise, a sequence of process steps recited in the present application as "a, b, c" ... or "A, B, C" is meant to indicate a sequence of steps in the order in which the respective letters appear in the alphabet. In specific instances, such default order may be deviated from in that the respective steps may be in reverse order or may be concomitant with each other. However, in such specific cases, this is usually indicated in the present application. As used herein, two steps are said to be concomitant with each other or to occur concomitantly with each other, if they occur in a temporarily overlapping manner. Such overlap may be complete, in which case both steps start at the same time and finish at the same time, or such overlap may be partial in which case one step starts first and the other starts thereafter while the first step is not finished yet.

A porous polymer matrix, as used herein is meant to refer to a polymer matrix which provides an interstitial space wherein other matter can be taken up, i.e. liquids or liquid crystals. Preferably, the interstitial space is in the form of pores. In preferred embodiments, the interstitial space has dimensions in the x, y, z-directions taken from the range 100 nm - 30 µm, more preferably 500 nm - 10 µm and even more preferably 600 nm - 5 µm.

Particles are herein referred to as being "electrically non-conducting", if these particles do not readily conduct an electrical current. In effect, an electrically non-conducting particle is an electrical insulator. More specifically, as used herein, particles are herein referred to as being "electrically non-conducting", if their resistivity is ≥10⁴ Ohm · m, preferably ≥10⁸ Ohm · m, more preferably ≥10¹⁰ Ohm · m, and even more preferably > 10¹⁰ Ohm ·m. If a particle is herein referred to as "electrically non-conducting", this is also meant to mean that such particle is not semiconducting either, (and, of course, not electrically conducting). The two terms "electrically non-conducting" and "not semiconducting" are used interchangeably herein.

The term "transparent conductive oxides" (TCO) is known to a person skilled in the art. It includes, without being limited thereto indium tin oxide (ITO), fluorine doped tin oxide (FTO), and zinc oxide (ZnO).

It is also clear to someone skilled in the art that for a particle, in order to be "electrically non-conducting" in the aforementioned sense, the particle may be made of a material having such property of electrical non-conductivity, or, alternatively it may be made of any material, including electrically conductive materials, as long as it is coated by an electrically non-conducting material. In one embodiment, the particles according to the present invention are particles of a so-called "core-shell structure", wherein the shell, i.e. the outer part of the particle is made of an electrically non-conducting material in the aforementioned sense. Such "core-shell-structures" of particles, in particular with respect to particles having dimensions < 1 µm (also sometimes referred to as "nanoparticles") are known to a person skilled in the art. In preferred embodiments, the particles in accordance with the present invention are made of or coated with a material selected from heat resistant polymers selected from melamine-formaldehyde resin, cross-linked silicone resin, cross-linked polystyrene resin, aluminium oxide (alumina) and silicone dioxide. Such particles may be used alone or in combination with each other. Furthermore, the particles may have additional coatings to aid in their dispersion or stabilization.

A "polymerization by chemical reaction" is herein referred to as being "photo-induced", if such induction of polymerization occurs by irradiating the composition with gamma-radiation, UV-light, visible light, and/or IR-radiation, preferably gamma-irradiation, UV-light and/or visible light. The term "chemically inert" when used in connection with particles is meant to refer to particles which do not chemically react. If such particles are herein referred to as being "chemically inert to metals, liquid crystal materials, polymers, dyes and transparent conductive oxides", this is meant to refer to particles which do not undergo any chemical reactions with the aforementioned materials. Typical dyes that are encountered in polymer dispersed liquid crystal cells are for example dichroic dyes, typical transparent conductive oxides which are encountered in a polymer dispersed liquid crystal cell are for example indium tin oxide. Typical polymers which are encountered in a polymer dispersed liquid crystal cell are for example polyimide. Typical liquid crystal materials which are encountered in a polymer dispersed liquid crystal cell are for example TL213 and TL203.

The particles in accordance with the present invention are not limited to a particular shape, for example they may be spherical, cubic, parallelepiped, ellipsoid and/or irregular in shape, without being limited to any of the foregoing. An ensemble of particles may also comprise particles of different shapes.

The term "partially reflective" when used in connection with a substrate is meant to refer to a substrate that transmits a proportion of the incident light and reflects the other proportion. This may be achieved by the substrate either being a semi-transparent/reflective substrate, or it may for example be achieved by a patterned reflective substrate having reflective patches and transmissive patches which are arranged adjacent to each other in a regular or irregular pattern.

A polymer dispersed liquid crystal cell in accordance with the invention may contain a liquid crystal material which is dye-doped. Preferably the dye which is used for such doping is a dichroic dye. If polymer dispersed liquid crystal cells are used in a liquid crystal display in accordance with the present invention, different cells may be doped with different dichroic dyes to yield differently coloured cells, such as red, green and/or blue cells.

A polymer dispersed liquid crystal cell in accordance with the present invention additionally comprises spacers to keep the substrates of the cell apart. These spacers may be made from a variety of materials which are suitable to fulfil this spacing function. In preferred embodiments, the spacers are made from polymer(s) or glass. The spacers in accordance with the present invention may take on a variety of shapes. For example they may be provided in the form of spacer balls which are included in the polymerization mixture. Alternatively, the spacers may for example be spacer pillars of a certain defined height. In any case, the spacers in accordance with the present invention have defined dimensions which thereby also define the distance between the substrates of the cell in accordance with the present invention.

Useful examples of the spacer balls in accordance with the present invention are the Hayabeads as described in the Examples. Polymers that are useful for the spacers are for example photo-resistive polymers.

The term, "polymer precursor", as used herein, may be any precursor which is able, either by itself or by means of other additives, to form a polymer. One example for a polymer precursor is monomers, oligomers, and mixtures thereof. Polymer precursors may, however, also be a liquid polymer melt. In the practice of the present invention, useful polymer precursors are selected from the group comprising urethanes, acrylates, esters, lactams, amides, siloxanes, aldehydes, phenols, anhydrides, epoxides, vinyls, alkenes, alkynes, styrenes, acid halides, amines, anilines, phenylenes, heterocycles and aromatic hydrocarbons. Precursors may, for example, also be halogenated, in particular fluorinated. Examples of useful precursors are described in Kitzerow, H - S, 1994, Lig. Cryst, 16, 1 - 31. Useful polymer precursors can also be obtained from a wide variety of commercial sources, one of them being the US company Norland Product Inc. One example for a useful polymer (precursor) for the practice of the present invention is PN393, which is a trademark for a UV-durable polymer precursor, obtainable from Funktionsfluid GmbH.

It is preferred that the particles once they are embedded in the polymer matrix are chemically inert, in the sense that they do not chemically react with the surroundings, for example the polymer matrix, any liquid crystal material present, metals, such as are for example encountered at the electrodes of a polymer dispersed liquid crystal cell etc. To this end, the particles in accordance with the present invention may also be coated, thereby rendering them chemically inert.

In the method of preparing a polymer dispersed liquid crystal in accordance with the present invention, particles become embedded in the porous polymer matrix. The inventors have found that by mixing the particles and the composition containing a material capable of forming a polymer and a liquid crystal material, and by subsequently inducing the composition to form a polymer, the particles, or at least a proportion thereof, become embedded in the polymer matrix that is formed. Hence, the term "thereby obtaining a porous polymer matrix having said particles embedded therein", as used herein, is meant to refer to a scenario wherein some but not necessarily all particles that are initially mixed with the composition, become embedded in the porous polymer matrix formed. A proportion of particles will also end up in the liquid crystal material that is occupying the pores of the porous polymer matrix but another substantial proportion of particles will become embedded in the polymer matrix.

In one embodiment, the particles are single particles which is used herein as referring to a state wherein each particle is a single particle and does not form aggregates. In another embodiment, the particles may, however, form aggregates of a plurality of such single particles. In either case, it is preferred that the single particles and the aggregates of particles have an average size in the range of from 1 nm to > 5000 nm, preferably 100 nm to > 3000 nm, and even more preferably from 200 nm to 800 nm, and most preferably in the wavelength range of visible light as outlined further below.

As used herein, particles or particle aggregates are referred to as having "an average size in the range of x nm to y nm" which does not mean that all particle or all aggregates need to have one single size. Rather the above phrase is meant to refer to a scenario wherein the individual size of each particle is to lie in the aforementioned range.

The preparation of a polymer dispersed liquid crystal in general can be achieved in a number of ways and involves the formation of a polymer network or porous polymer matrix.

Various techniques have been developed to achieve such formation of a polymer network which are used depending on the individual circumstances. For example, when a pre-polymer material is miscible with a liquid crystal compound a phase separation by polymerization is used. This technique is referred to as polymerization-induced phase separation (PIPS). A homogeneous solution is made by mixing the pre-polymer with the liquid crystal. Thereafter a polymerization is achieved through a condensation reaction, as with epoxy resins, or through a free radical polymerization, as with vinyl monomer catalyzed with a free radical initiator such as benzoyl peroxide; or by a photo-initiated polymerization including the use of such techniques as gamma-ray or electron-beam polymerisation. Upon polymerization the solubility of the liquid crystal decreases as the polymers lengthen until the liquid crystal forms droplets within a polymer network, or an interconnected liquid crystal network forms within a growing polymer network, or the polymer forms globules within a liquid crystal sea. When the polymer starts to gel and/or crosslink it will lock the growing droplets or the interconnected liquid crystal network thereby arresting them/it in their/its state at that time. The droplet size and the morphology of droplets or the dimensions of the liquid crystal network are determined during the time between the droplet nucleation/initiation of network formation and the gelling of the polymer. Important factors are the rate of polymerization, the relative concentrations of materials, the temperature, the types of liquid crystal and polymers used and various other physical parameters, such as viscosity, solubility of the liquid crystal in the polymer. Reasonably uniform size droplets can be achieved by this technique. Sizes prepared in the past have ranged from 0.01 µm - 30 µm. Polymerisation induced phase separation (PIPS) is a preferred method for forming PDLC films. The process begins with a homogeneous mixture of liquid crystal and monomer or pre-polymer. Polymerisation is initiated to induce phase separation. Droplet size and morphology are determined by the rate and the duration of polymerisation, the types of liquid crystal and polymers and their proportions in the mixture, viscosity, rate of diffusion, temperature and solubility of the liquid crystal in the polymer (West, J.L., Phase-separation of liquid-crystals in polymer. Molecular Crystals and Liquid Crystals, 1988. 157: p. 427-441, Golemme, A., Zumer, S., Doane, J.W., and Neubert, M.E., Deuterium nmr of polymer dispersed liquid crystals. Physical Review a, 1988. 37(2): p. 599-569, Smith, G.W. and Vaz, N.A., The relationship between formation kinetics and microdroplet size of epoxy based polymer-dispersed liquid-crystals. Liquid Crystals, 1988. 3(5): p. 543-571, Vaz, N.A. and Montgomery, G.P., Refractive-indexes of polymer-dispersed liquid-crystal film materials - epoxy based system. Journal Of Applied Physics, 1987. 62(8): p 3161-3172). In ultraviolet light (UV) initiated polymerisation, the rate of curing may be changed by changing the light intensity (Whitehead Jr, J.B., Gill, N.L., and Adams, C., Characterization of the phase separation of the E7 liquid crystal component mixtures in a thiol-ene based polymer. Proc. SPIE, 2000. 4107: p. 189). The PIPS method using free-radical polymerisation is by far the most studied, and the majority of free-radical polymerisation systems are initiated by UV light. The process has several advantages over other methods such as, better phase separation, uniform droplet size, and better control of the droplet size. However, the presence of dyes that absorb UV and visible radiation in the mixture prior to curing can lead to incomplete or the complete prevention of successful curing. Furthermore, the dyes may decompose upon curing. Moreover, the phase separation is generally not fully complete and so some dyes and liquid crystal may remain trapped in the polymer after curing, the presence of such dyes in the polymer often results in a degradation in the optical performance of the films.

Another technique used for obtaining PDLC composites is thermal induced phase separation (TIPS). This technique can be used for liquid crystal materials and thermoplastic materials which are capable of forming a homogenous solution above the melt temperature of the polymer. The homogenous solution of liquid crystal in the thermoplastic melt is cooled below the melting point of the thermoplastic material, thereby causing a phase separation of the liquid crystal. The droplet size of the liquid crystal is determined by the rate of cooling and a number of other material parameters. Examples of TIPS-prepared composites are polymethylmethacrylate (PMMA) and polyvinylformal (PVF) with cyanobiphenyl liquid crystal. Generally, the concentrations of liquid crystals required for TIPS-film are larger in comparison to PIPS-prepared films.

Another technique used to prepare polymer dispersed liquid crystal composites is solvent-induced phase separation (SIPS). This makes use of a liquid crystal and a thermoplastic material dissolved in a common solvent thereby forming a homogenous solution. The ensuing evaporation of the solvent results in phase separation of the liquid crystal, droplet formation and growth, and polymer gelation. Solvent evaporation can also be used in conjunction with thermal processing of materials which melt below their decomposition temperature. First of all films are formed on a suitable substrate using standard film coating techniques, e. g. doctor blading, spin coating, web coating, etc. The solvent is thereafter removed with no concern of droplets size or density. Then the film is warmed again to re-dissolve the liquid crystal in the polymer and then cooled at a rate which is chosen to give the desired droplet size and density. In effect, the latter example is a combination of SIPS with TIPS.

A further technique used for the construction of PDLC films is the emulsification of the liquid crystal into an aqueous solution of a film-forming polymer ("emulsion method"). This emulsion is coated onto a conductive substrate and allowed to dry. As the film dries, the polymer forms a solid phase which both contains and supports the dispersed liquid crystal droplets. Lamination of a second conductive substrate leads to the final PDLC film. One common feature of emulsion-based systems is that the coating undergoes a significant volume change as the film dries. This shrinkage tends to deform the droplets, which are spherical in solution, into flattened (oblate) spheroids in the PDLC film. This shape anisotropy affects the alignment of the liquid crystal within the film cavities. For example, bipolar droplets in emulsion-based films form with the droplets symmetry axis aligned in the film plane, which in turn affects the electro-optical properties of the film.

As used herein, the term "removing said first liquid crystal material from said porous polymer matrix and replacing it by a second liquid crystal material" can mean a replacement overall, i.e. a complete replacement, or a replacement in parts.

In the method of producing a polymer dispersed liquid crystal cell, there is a heating step (step E). This heating step E) may be performed whilst steps C) and D) are still in progress, or it may be performed after steps C) and D) are finished. In another embodiment, the heating step E) may also be performed, after C) has been finished, but prior to step D), i.e. before a third substrate is placed on the porous polymer matrix.

In a preferred embodiment of the method of producing a polymer dispersed liquid crystal cell, at least said second substrate has surface properties sufficiently dissimilar to surface properties of said porous polymer matrix, allowing said second substrate to be easily lifted off in step B).

Preferably, said second substrate has a surface layer that is soluble in a first solvent, and step B) is performed after said second substrate has been immersed in said first solvent. For example, said second substrate may be of polymethylmethacrylate, and said first solvent may be methanol.

In one embodiment, said second substrate has substantially hydrophobic surface properties if said polymer matrix has substantially hydrophilic surface properties and vice versa. For example said first substrate may be hydrophilic glass substrate, such as plasma treated glass and said second substrate may be a hydrophobic anti-sticking substrate, such as glass coated with polytetrafluoroethylene (PTFE) or glass treated with fluorosilane or a fluoropolymer.

Preferably, said second substrate has a contact angle of a solution of monomer, or of a solution of oligomer, or of a solution of polymer precursor, as defined above, in the range of from 0 to 180 degrees, preferably from 10 to 180 degrees, more preferably greater than 90 degrees, with respect to said second substrate. The term "contact angle of a solution of ...", as used herein, is meant to denote the angle that a drop of a liquid composition of monomer/oligomer/prepolymer (i.e. a solution thereof) adopts when applied to a surface of said second substrate.

In a preferred embodiment, said second substrate has a smooth surface, preferably with a surface roughness not larger than 20 µm.

In one embodiment, said second substrate has a low surface energy and preferably is selected from the group comprising polyethylene terephthalate (PET), polymethylmethacrylate, polyvinyl acetate (PVA), polystyrene, acetal, ethyl vinyl acetate (EVA), polyethylene, polypropylene, polyvinylidene fluoride (PVDF, Tedlar®, polytetrafluorethylene, Teflon®), surface modified glass, e.g. silanised glass.

In one embodiment, said porous polymer matrix is made of a material selected from the group comprising PN393 prepolymer, polymethacrylate, polyurethane, PVA and epoxy. PN393 pre-polymer can be obtained from Merck and FFL Funktionsfluid GmbH, Germany and is a UV-curable acrylate-based polymer.

Preferably, said second substrate is selected from the group comprising PET, polyvinyl acetate (PVA), polystyrene, acetal, ethyl vinyl acetate (EVA), polyethylene, polypropylene, polyvinylidene fluoride (PVDF, Tedlar®, polytetrafluorethylene, Teflon®) and said porous polymer matrix is made of a material selected from the group comprising polymethacrylate, polyurethane, PVA and epoxy.

The method of producing a polymer dispersed liquid crystal cell in accordance with the present invention may be used for producing a transmissive cell in which case both substrates, i.e. the first and the third substrates are transparent, or it may be used for producing a reflective cell, in which one of the two substrates, i.e. one of the first and the third substrate is reflective or partially reflective; the latter either uniformly partially reflecting or patterned areas of transmission and reflection to give the viewer an impression of partial reflection.

As used herein, the term "transparent" or "reflective" when used in connection with a substrate is meant to refer to transmission and reflection, respectively, of visible light

In accordance with the present invention, a polymer dispersed liquid crystal cell may, additionally, have a diffuse layer at the backplane, such as is for example described in EP 1610170 A1. In this case, the heating step E) is performed in a temperature range of from > 30°C to < 200°C. However, in another embodiment, a polymer dispersed liquid crystal cell in accordance with the present invention may not have such an additional diffuse layer. In this case, the heating step E) is performed in a temperature range of > 30°C and < 120°C, more preferably from 75°C to 90°C and even more preferably from 80°C to 85°C.

Particles that are useful in connection with the present invention are particles having sizes in the range of from 1 nm to 5 µm. Such particles are herein also sometimes referred to as "nano/micro-particles". In a preferred embodiment the particles according to the present invention have sizes in the range of from 1 nm to <1000 nm. These particles are herein also sometimes referred to as "nanoparticles". In a particularly preferred embodiment, the particles have sizes in the range of from 100 nm to < 3000 nm, preferably from 100 nm to <1000 nm, even more preferably from 200 nm to 800 nm and most preferably in the wavelength range of the visible light spectrum, which is useful for an efficient scattering in the visible light spectrum. It is known to someone skilled in the art that the wavelength range of visible light is from approximately 390 nm to 760 nm for humans (see also "Lehrbuch der Tierphysiologie", Penzlin, 4th edition, Gustav Fischer Verlag, 1989, chapter 5).

Sometimes a "polymer dispersed liquid crystal cell" is also herein referred to as a polymer network liquid crystal cell (PNLC). The two terms are used interchangeably herein.

In the practice of the invention, useful liquid crystal materials are manifold, and a wide variety can be commercially obtained from various sources. For example, the company Merck offers a wide range of liquid crystal materials. Although by no means limited thereto, useful examples in the practice of the present invention include liquid crystal compounds selected from positive type fluorinated nematic liquid crystals. Liquid crystal materials referred to as "TL213 and TL203" which are mixtures of various proportions of different positive type fluorinated nematic liquid crystals are useful. Other useful example liquid crystals are TL202, TL204, TL205, TL215, TL216. TL213 and TL203 and all other aforementioned liquid crystals are trademarks of Merck GmbH and are commercially available from Merck (Catalogue: Licristal May 2002)

Dyes which are useful in the practice of the present invention are UV-sensitive dyes, UV-stable dyes, cis-trans-isomer dyes, dichroic dyes and dipolar dyes. Preferred examples are mixtures of azo-dyes and anthraquinone dichroic dyes.
In the preparation of a polymer dispersed liquid crystal, a phase separation is induced. Such induction to undergo a phase separation can be achieved by in a number of ways, for example by methods such as polymerization-induced phase separation (PIPS), thermal induced phase separation (TIPS), solvent-induced phase separation (SIPS), all of which are for example described in WO 03/050203 and EP 1693698.

Transparent conductive oxides (TCO) useful in the practice of the present invention are manifold and are known to someone skilled in the art. Useful examples for TCOs are indium tin oxide, and fluorine doped tin oxide (FTO).

In preferred embodiments of the present invention, the particles are made of a material that is non-absorbing in the visible wavelength range. Their dimensions are in the range from 1 nm to 5 µm and turn out to be such that they contribute to an efficient scattering in the visible wavelength range. In particularly preferred embodiments, the dimensions of the particles are in the range of from 100 nm to < 1000 nm, more preferably from 200 nm to 800 nm and most preferably in the visible wavelength range from approximately 390 nm to approximately 760 nm as in this range, the highest degree of scattering is achieved. For particles having a smaller size than this range, the inventors have found that these may still be used, because they can form aggregates and thereby efficiently scatter visible light. Furthermore, the inventors have found that the material from which the particles in accordance with the present invention are made should be electrically non-conducting, as this reduces the resistivity of the cell and thereby its overall reliability (and the reliability of a display formed by such cells), and it allows for a control and/or modification of the diffusing properties of a backplane in a PDLC.

The term "polymer-precursor", as used herein, is meant to refer to any entity capable of forming a polymer. It comprises monomers and oligomers and any combination thereof. It also comprises molten, i.e. liquid polymers which may be induced to solidify and thereby form a solid phase polymer.

The present inventors have surprisingly found that the use of particles, as defined above, which are embedded in a PDLC film allow for a control and/or modification of the diffusing properties of a backplane reflector in a PDLC without having to manipulate the surface of a backplane reflector itself. Furthermore, according to the present invention, a display can be made without an additional diffuse layer. Such an additional diffuse layer, if present, would increase the cell gap of the display. Because in accordance with the present invention a display can also be made without such additional diffuse layer, this gives the additional advantage of not increasing the driving voltage, because the cell gap is not increased. At the same time the need for a high-temperature fabrication which is normally entailed by including an additional diffuse layer, is also obviated. It should be noted however, that a cell in accordance with the present invention may, of course, have an additional diffuse layer on its backplane, as described in EP 1 610170 A1. Using the present invention, the application of high temperatures and solvent may be avoided, and the necessity of a diffuse layer is eliminated. Consequently, a polymer dispersed liquid crystal cell and a reflective display comprising such cell can employ a wider range of backplanes, such as flexible and/or solvent/heat-sensitive organic thin film transistors (TFTs).

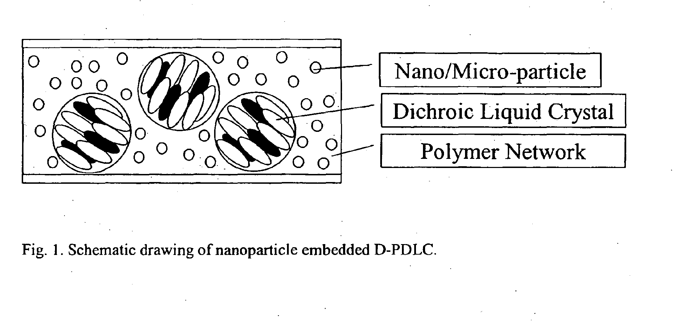

In the following; reference is made to the figures, wherein
Figure 1 shows a schematic drawing of a D-PDLC (dichroic PDLC or dye-doped PDLC) into which nanoparticles have been embedded,
figure 2 shows an SEM image of a PDLC which has been doped with nanoparticles. S6 melamine-formaldehyde resin nanoparticles remain in the PDLC film even after the liquid crystal (LC) is washed with a solvent,
figure 3 shows the on-state (Ton) & off-state (Toff) transmittance dependency plotted vs. nanoparticle concentration in transmissive test cells. Ton decreases because of the scattering introduced by nanoparticles in polymer matrix,
figure 4 shows the switching voltage dependency with nanoparticle concentration. No clear trend was observed. V10 is a voltage required to switch LC to 10% transmittance. V90 is a voltage required to switch LC to 90% transmittance,
figure 5 shows the response time dependency with nanoparticle concentration. No clear trend was observed. tr is the time required to switch LC on when V90 is applied. td is the time required to switch LC off when V90 is turned off,
figure 6 shows the reflectivity dependency with the angle of incident light. The reflectivity decrease is less steep with 5 wt% S6 nanoparticle doped D-PDLC thus the viewing angle is broader,
figure 7 shows the contrast ratio dependency with the angle of incident light. The contrast ratio decrease is less steep with 5 wt% S6 nanoparticle doped D-PDLC,
and figure 8 shows the ratio of the contrast ratios at 30° and 44°. Decrease in the ratio shows that the viewing angle dependency decreases with S6 nanoparticle doping.

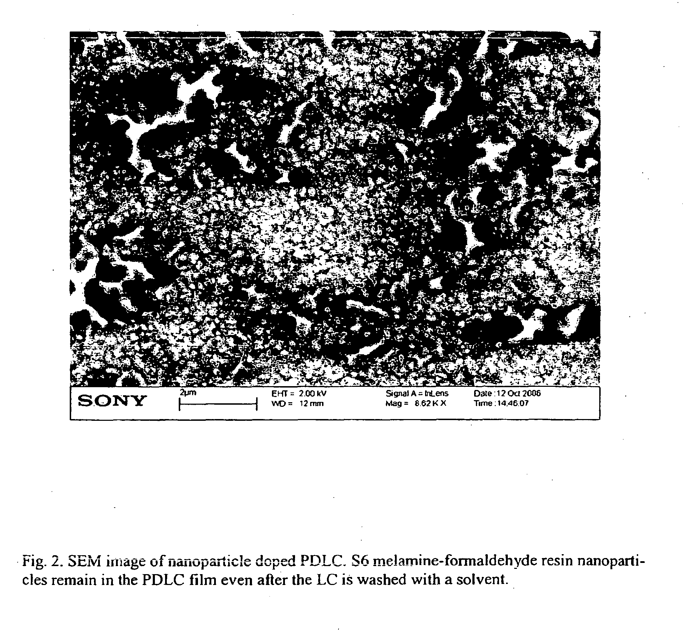

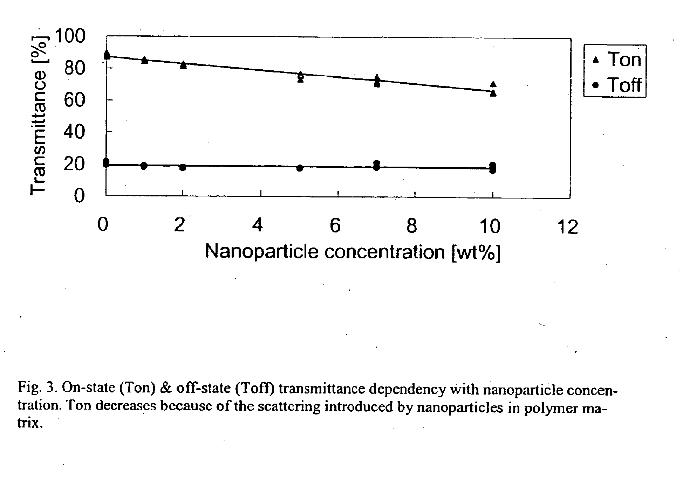

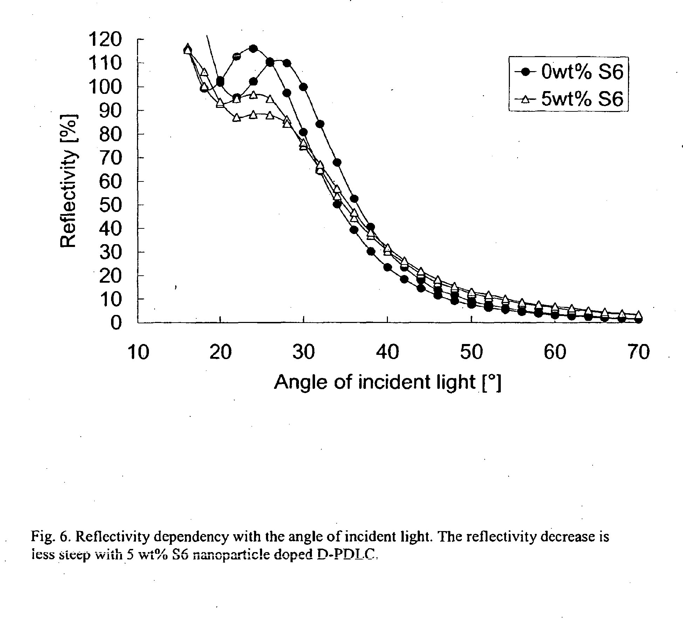

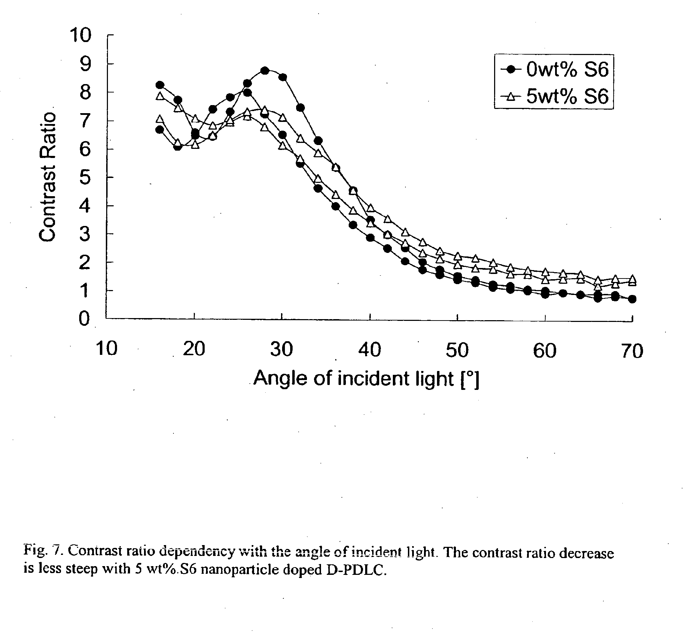

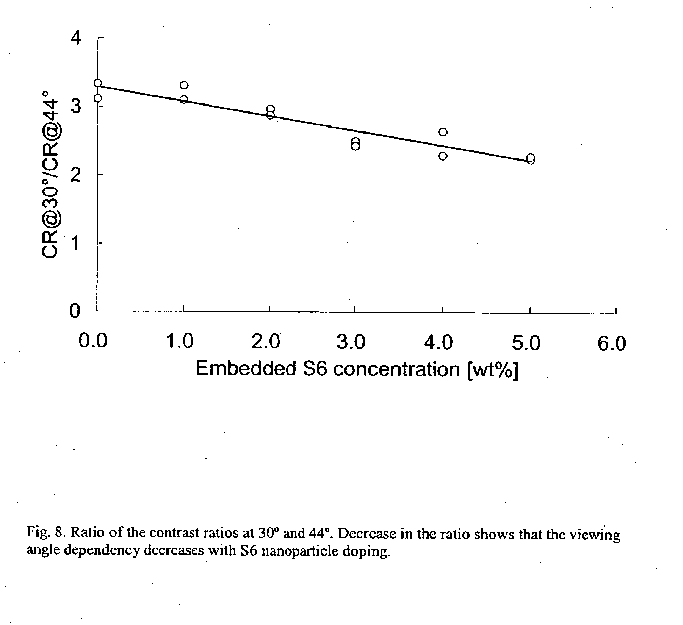

Figure 2 illustrates that the nanoparticles remain in the polymer phase even after the liquid crystal material has been washed out, thus showing that the particles are embedded in the polymer phase simply by introducing them in the polymerization mixture prior to polymerization. Figures 3-5 demonstrate that the on-state transmittance was reduced with an increasing concentration of nanoparticles, whereas with switching voltage dependency and response dependency no clear trend was observed becauase the particles (in accordance with the present invention) are electrically not-conducting and the cell geometry, such as the cell gap, is also not affected. Hence, there is no reason for the switching voltage dependency and the response dependency to change. Figure 6 shows two results, namely that the maximum reflectivity is reduced which is also consistent with the result observed using the transmissive cells (see figure 3), and the reflectivity decrease is less steep and hence less dependent in the D-PDLC that has been doped with nanoparticles (5 wt.% S6 melamin nanoparticles). Figure 7 shows likewise that the dependency of the contrast ratio on the viewing angle is smaller when the D-PDLC cells are doped with 5% S6 nanoparticles. A good measure for such decreased dependency is the ratio of the contrast ratios at 30° and 44° viewing angle. If one calculates such ratio of the contrast ratios at 30° and 44° and plots this against the respective nanoparticle concentrations, a decrease can be observed, as can be seen in figure 8 which shows that the viewing angle dependency of the contrast ratio decreases with increasing nanoparticle doping.

The present invention also relates to a polymer dispersed liquid crystal cell display which, essentially, makes use of a polymer dispersed liquid crystal cell in accordance with the present invention and which is preferably used as projection display, electrically switching window, phase modulation device, optical switch, etc. The other components of such a polymer dispersed liquid crystal cell display are well-known to someone skilled in the art and include e.g. spacers to keep the two substrates apart.

The present inventors developed a paper-like display using nanoparticle embedded D-PDLC front planes. The embedded nanoparticles add a small diffusion to the on-state of the D-PDLC cell or display, which, in turn, reduces its metallic glare and its viewing angle dependency. The technique eliminates the need of a diffuse layer which leads to a wider choice of backplanes such as flexible and/or solvent/heat-sensitive organic TFTs.

Furthermore, reference is made to the following example which is given to illustrate, not to limit the present invention.

### Examples

In order to avoid the usage of heat and solvent for the display fabrication, a PDLC film embedded with nanoparticles was made using a lift-off technique (as described e.g. in EP 1 693 698 A1 and Akira Masutani, et al. , "Improvement of dichroic polymer dispersed liquid crystal performance using lift-off technique", Appl. Phys. Lett. 89, (18), 2006)).

For the fabrication of a PDLC, 78.9 wt% TL213 nematic LC (Merck) and 21.1 wt% PN393 UV-curable pre-polymer (FFL Funktionsfluid) were mixed together with small amount of 8µm spacers (Hayabeads). Secondly, a variable amount of melamine formaldehyde nanoparticles (250-550 nm diameter, Eposter S6 from Nippon Shokubai) were added to the solution. The solution was then sandwiched between a hydrophilic glass substrate and a hydrophobic anti-sticking substrate.

The phase separation of the TL213-PN393 solution was initiated by irradiating the cell with 5 mW/cm² 365 nm UV for 1 min at 22°C, which results in a polymer network-type morphology. Then the anti-sticking substrate was slowly separated from the PDLC film. Subsequently the LC in the PDLC film was fully removed from the polymer matrix by washing the film with methanol. The sample was then dried by placing the cell on a hotplate at 80 °C for 30 min.

Then TL203 nematic LC (Merck) doped with 1 wt% BrPhOPh (4-bromobiphenyl, Aldrich) and 3 wt% Black-4 dye (Mitsubishi Chemical) was dropcast on the washed PDLC film. The PDLC was covered with either (a) an ITO coated glass to make transmissive cells, or (b) a diffuse reflector to make reflective cells. Finally, the cell was heated to 80°C on a hotplate for 30 min.

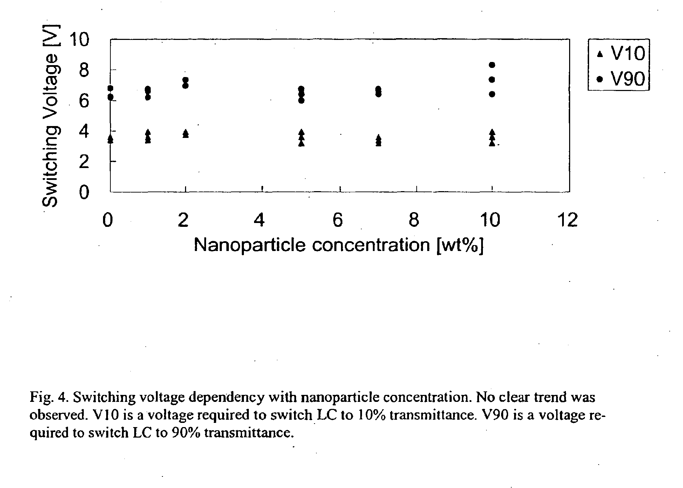

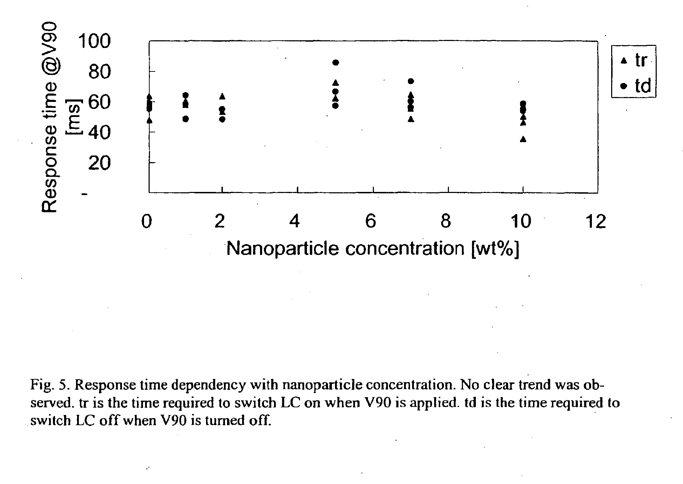

Electro-optical characterizations were carried out for transmissive cells. A constant reduction of on-state transmittance (Tₒₙ) was observed with the increase of S6 nanoparticle concentration (Fig. 3). This is because of the scattering introduced by the refractive index mismatch between LC (ordinary refractive index nₒ=1.529) and S6 (n=1.66). In contrast, off-state transmittance (T_{off}) stays unchanged at 19±2 % because of the smaller refractive index mismatch (LC's average refractive index nₐᵥₑ=1.597) (Fig. 3). Within the experimental error, no clear trends could be observed with switching voltage (7±1 V), rise time (60±10 ms), and decay time (60±10 ms) (Fig. 4 and 5).

Viewing angle dependent reflectivity (Fig. 6) and contrast ratio (Fig. 7) of the reflective cells were measured using an LCD evaluation system "Photal Otsuka Electronics LCD-700". The normalization of 100% was taken using diffusing White standard (Labsphere SRS 99-020). The detector was set at 0° (surface normal) while the incident parallel white light was moved from 15° to 70°.

The maximum reflectivity is reduced which is consistent with the corresponding reduced transmission result observed using the transmissive cells.

The contrast ratio was defined as (Reflectivity at white-state)/(Reflectivity at black-state). Both reflectivity and contrast ratio dependency against the viewing angle are smaller when the D-PDLC cells are doped with 5% S6 nanoparticles. When the incident light was at 30°, the D-PDLC achieved a on-state reflectivity of 85±5 % and contrast ratio of 6.7±0.5.
When the contrast ratio at 30 degrees is divided by the contrast ratio at 44 degrees, one can see clear decrease in the viewing angle dependency (Fig. 8).

The features of the present invention disclosed in the specification, the claims and/or in the accompanying drawings, may, both separately, and in any combination thereof, be material for realising the invention in various forms thereof.

## Claims

1. A method of preparing a polymer dispersed liquid crystal, said method comprising the steps:
a) providing, in any order,
- particles having an average size in the range from 1 nm to 5 µm, and
- a composition containing a material capable of forming a polymer, said composition further containing a first liquid crystal material,
b) mixing said particles and said composition,
c) inducing said composition to form a polymer, preferably by polymerization induced phase separation (PIPS), thermal induced phase separation (TIPS) or solvent induced phase separation (SIPS), more preferably inducing said composition to undergo polymerization by chemical reaction, even more preferably a polymerization by chemical reaction which is photo-induced, thereby obtaining a porous polymer matrix having said particles embedded therein, said matrix furthermore having pores which are occupied by said first liquid crystal material,
**characterized in that** said particles are electrically non-conducting.

2. The method according to claim 1, wherein step c) occurs by polymerization induced phase separation (PEPS), and said material capable of forming a polymer comprises polymer-precursors, preferably monomers and/or oligomers.

3. The method according to claims 1-2, **characterized in that** said particles are chemically inert.

4. The method according to claim 3, **characterized in that** said particles are chemically inert to metals, liquid crystal materials, polymers, dyes and transparent conductive oxides.

5. The method according to claim 4, **characterized in that** said particles are chemically inert to metals, liquid crystal materials, polymers, dyes and transparent conductive oxides such as are encountered in a polymer dispersed liquid crystal cell.

6. The method according to any of the foregoing claims, **characterized in that** said particles are single particles.

7. The method according to claim 6, **characterized in that** said particles have an average size in the range from 1 nm to < 5000 nm, more preferably 100 nm to < 3000 nm, even more preferably from 200 nm to 800 nm, and most preferably in the wavelength range of visible light.

8. The method according to any of claims 1-5, **characterized in that** said particles are particle aggregates.

9. The method according to claim 8, **characterized in that** said particle aggregates have an average size in the range from 1 nm to < 5000 nm, more preferably 100 nm to < 3000 nm, even more preferably from 200 nm to 800 nm, and most preferably in the wavelength range of visible light.

10. The method according to any of the foregoing claims, **characterized in that** said particles are made of or coated with a material selected from heat resistant polymers selected from crosslinked silicone resin, crosslinked polystyrene, crosslinked acrylic resin, PMMA, melamine-formaldehyde resin, aromatic polyamide resin, polyimide resin, polyamide-imide resin, crosslinked polyesters, fluorinated polymers (e.g. TEFLON^{®}), metal oxides, such as aluminium oxide, silicon dioxide, e.g. silica, glass, preferably glass beads and carbon, such as diamond.

11. The method according to claim 10, **characterized in that** said particles are made of or coated with a heat resistant polymer selected from crosslinked silicone resin, crosslinked polystyrene, crosslinked acrylic resin, melamine-formaldehyde resin, aromatic polyamide resin, polyimide resin, polyamide-imide resin, crosslinked polyester, aluminium oxide, silicon dioxide, diamond and mixtures of any of the foregoing.

12. The method according to any of the foregoing claims, **characterized in that** said particles are mixed with said composition in step b) at a concentration in the range of from 0.1 wt.% to 20 wt.%, preferably from 1 wt.% to 10 wt.%, with reference to the weight of the composition.

13. A method of producing a polymer dispersed liquid crystal cell, said method comprising the steps:
A) performing the method according to any of claims 1-12 by placing the product of step b) between a first and a second substrate, and performing step c) to obtain a porous polymer matrix between said first and second substrate, said porous polymer matrix having said particles embedded therein and furthermore having pores which are occupied by said first liquid crystal material,
B) lifting off said second substrate from a face of said porous polymer matrix,
C) removing said first liquid crystal material, from said porous polymer matrix and replacing it by a second liquid crystal material
D) placing a third substrate on said face of said porous polymer matrix from which face said second substrate had been lifted off in step B), thereby obtaining a polymer dispersed liquid crystal cell.

14. The method according to claim 13, comprising the further step:
E) heating said polymer dispersed liquid crystal cell to a temperature in the range from 30°C to 200°C for a period in the range from 5s to 3h.

15. The method according to claim 14, **characterized in that,** in step E), said polymer dispersed liquid crystal cell is heated to a temperature in the range from 30°C to 120°C, more preferably from 75°C to 90°C, and even more preferably from 80°C to 85°C.

16. The method according to claim 15, **characterized in that** step E) is performed for a period of 5 s to 60 min, preferably for a period of 10 min to 40 min.

17. The method according to any of claims 13-16, **characterized in that** steps C) and D) occur in the order CD or DC or concomitantly with each other.

18. The method according to any of claims 13-17, **characterized in that** step C) is performed by removing said first liquid crystal material, from said porous polymer matrix by a process selected from washing out, sucking and evaporating, and adding said second liquid crystal material to said porous polymer matrix by a process selected from imbibing said second liquid crystal material into said porous polymer matrix, flooding said porous polymer matrix with said second liquid crystal material, immersing said porous polymer matrix into said second liquid crystal material, capillary force filling said porous polymer matrix with said second liquid crystal material under vacuum, and drop casting said second liquid crystal material on said porous polymer matrix.

19. The method according to any of claims 13-18, **characterized in that** said second liquid crystal material is dye-doped.

20. The method according to any of claims 13-19, **characterized in that** said polymer dispersed liquid crystal cell is a transmissive cell and both said first and third substrates are transparent, such as glass coated with a transparent conductive oxide (TCO), e.g. indium tin oxide (ITO), fluorine doped tin oxide (FTO), zinc oxide (ZnO).

21. The method according to any of claims 13-19, **characterized in that** said polymer dispersed liquid crystal cell is a reflective cell and one of said first and third substrates is reflective or partially reflective, such as glass coated with metal, and the other of said first and third substrates is transparent.

22. A polymer dispersed liquid crystal prepared by the method according to any of claims 1-12.

23. A polymer dispersed liquid crystal cell produced by the method according to any of claims 13-21.

24. The polymer dispersed liquid crystal cell according to claim 23, additionally comprising spacers arranged between said first substrate and said third substrate to keep said first and third substrate apart.

25. The polymer dispersed liquid crystal cell according to claim 24, wherein said spacers are made from polymer(s) or glass.

26. A liquid crystal display containing at least two polymer dispersed liquid crystal cells as defined in any of claims 23-25.

27. Use of particles as defined in any of claims 1-12 for preparing a polymer dispersed liquid crystal having a porous polymer matrix with said particles embedded therein, said matrix having pores which are occupied by a liquid crystal material, **characterized in that** said particles are added to a composition containing a material capable of forming a polymer, said composition further containing a liquid crystal material, and, after addition of said particles, said composition is induced to form a polymer, preferably by polymerization induced phase separation (PIPS), thermal induced phase separation (TIPS) or solvent induced phase separation (SIPS), wherein, more preferably said composition is induced to undergo polymerization by chemical reaction, even more preferably a polymerization by chemical reaction which is photo-induced, thereby obtaining said polymer dispersed liquid crystal.

## Patentansprüche

1. Verfahren zur Herstellung eines Polymer-dispergierten Flüssigkeitskristalls, wobei die Methode die Schritte umfasst:
a) zur Verfügung stellen, in beliebiger Reihenfolge, von
- Partikeln, die eine durchschnittliche Größe im Bereich von 1 nm bis 5 µm aufweisen, und
- einer Zusammensetzung, die ein Material enthält, das zur Bildung eines Polymers in der Lage ist, wobei die Zusammensetzung weiterhin ein erstes Flüssigkristall-Material enthält,
b) Mischen der Partikel und der Zusammensetzung,
c) Induzieren der Zusammensetzung, einen Polymer zu bilden, bevorzugt mittels Polymerisations-induzierter Phasentrennung (PIPS), thermisch induzierter Phasentrennung (TIPS) oder Lösungsmittel-induzierter Phasentrennung (SIPS), weiter bevorzugt Induzieren der Zusammensetzung, sich Polymerisation zu unterziehen durch chemische Reaktion, noch weiter bevorzugt eine Polymerisation durch chemische Reaktion, welche photoinduziert ist,
dabei Erhalten einer porösen Polymer-Matrix, die die Partikel darin eingebettet hat,
wobei die Matrix weiterhin Poren aufweist, welche von dem ersten Flüssigkristall-Material besetzt sind, charakterisiert **dadurch**, dass die Partikel elektrisch nicht leitfähig sind.

2. Verfahren gemäß Anspruch 1, wobei Schritt c) durch Polymerisations-induzierte Phasentrennung (PIPS) erfolgt und das Material, das zur Bildung eines Polymers in der Lage ist, Polymervorläufer, bevorzugt Monomere und/oder Oligomere umfasst.

3. Verfahren gemäß der Ansprüche 1 bis 2, charakterisiert **dadurch**, dass die Partikel chemisch inert sind.

4. Verfahren gemäß Anspruch 3, charakterisiert **dadurch**, dass die Partikel gegenüber Metallen, Flüssigkristall-Materialien, Polymeren, Farbstoffen und transparenten leitfähigen Oxiden chemisch inert sind.

5. Verfahren gemäß Anspruch 4, charakterisiert **dadurch**, dass die Partikel gegenüber Metallen, Flüssigkristall-Materialien, Polymeren, Farbstoffen und transparenten leitfähigen Oxiden, wie sie zum Beispiel in einer Polymer-dispergierten Flüssigkristall-Zelle angetroffen werden, chemisch inert sind.

6. Verfahren gemäß einem der vorangehenden Ansprüche, charakterisiert **dadurch**, dass die Partikel einzelne Partikel sind.

7. Verfahren gemäß Anspruch 6, charakterisiert **dadurch**, dass die Partikel eine durchschnittliche Größe im Bereich von 1 nm bis < 5000 nm, weiter bevorzugt 100 nm bis < 3000 nm, noch weiter bevorzugt von 200 nm bis 800 nm und am meisten bevorzugt im Wellenlängenbereich von sichtbarem Licht haben.

8. Verfahren gemäß einem der Ansprüche 1-5, charakterisiert **dadurch**, dass die Partikel, Partikel-Aggregate sind.

9. Verfahren gemäß Anspruch 8, charakterisiert **dadurch**, dass die Partikel-Aggregate eine durchschnittliche Größe im Bereich von 1 nm bis < 5000 nm, weiter bevorzugt 100 nm bis < 3000 nm, noch weiter bevorzugt von 200 nm bis 800 nm und am meisten bevorzugt im Wellenlängenbereich von sichtbarem Licht haben.

10. Verfahren gemäß einem der vorangehenden Ansprüche, charakterisiert **dadurch**, dass die Partikel mit einem Material hergestellt sind oder mit einem Material beschichtet sind, das ausgewählt ist aus Hitze-resistenten Polymeren ausgewählt aus quervemetztem Silikon-Harz, quervernetzem Polystyrol, quervernetztem Acryl-Harz, PMMA, Melamin-Formaldehyd-Harz, aromatischem Polyamid-Harz, Polyimid-Harz, Polyamid-Imid-Harz, quervernetzten Polyestern, fluorierten Polymeren (z.B. TEFLON^{®}), Metalloxiden, wie zum Beispiel Aluminiumoxid, Silikonoxid, z.B. Silica, Glas, bevorzugt Glaskügelchen und Kohlenstoff, wie z.B. Diamant.

11. Verfahren gemäß Anspruch 10, charakterisiert **dadurch**, dass die Partikel aus einem Hitze-resistenten Polymer hergestellt sind oder damit beschichtet sind, der ausgewählt ist aus quervernetztem Silikon-Harz, quervernetzem Polystyrol, quervernetztem Acryl-Harz, Melamin-Formaldehyd-Harz, aromatischem Polyamid-Harz, Polyimid-Harz, Polyamid-Imid-Harz, quervernetztem Polyester, Aluminiumoxid, Silikondioxid, Diamant und Mischungen aus einem der vorangehenden.

12. Verfahren gemäß einem der vorangehenden Ansprüche, charakterisiert **dadurch**, dass die Partikel mit der Zusammensetzung in Schritt b) bei einer Konzentration im Bereich von 0,1 Gew.-% bis 20 Gew.-%, bevorzugt von 1 Gew.-% bis 10 Gew.-% bezogen auf das Gewicht der Zusammensetzung gemischt werden.

13. Verfahren zur Herstellung einer Polymer-dispergierten Flüssigkristall-Zelle, wobei das Verfahren die Schritte umfasst:
A) Durchführen des Verfahrens gemäß einem der Ansprüche 1 bis 12 durch Platzieren des Produktes von Schritt b) zwischen einem ersten und einem zweiten Substrat, und Durchführen von Schritt c), um eine poröse Polymer-Matrix zwischen dem ersten und dem zweiten Substrat zu erhalten, wobei die poröse Polymermatrix die ersten Partikel darin eingebettet aufweist und weiterhin Poren aufweist, welche durch das erste Flüssigkristiall-Material besetzt sind,
B) Abheben des zweiten Substrates von einer Fläche der porösen Polymer-Matrix,
C) Entfernen des ersten Flüssigkristall-Materials aus der porösen Polymer-Matrix und Ersetzen des ersten Flüssigkristall-Materials mit einem zweiten Flüssigkristall-Materials
D) Platzieren eines dritten Substrates auf die Fläche der porösen Polymer-Matrix, von welcher Fläche das zweite Substrat in Schritt B) abgehoben wurde, dabei Erhalten einer Polymer-dispergierten Flüssigkristall-Zelle.

14. Verfahren gemäß Anspruch 13, umfassend den weiteren Schritt:
E) Erhitzen der Polymer-dispergierten Flüssigkristall-Zelle auf eine Temperatur im Bereich von 30°C bis 200°C für eine Zeitspanne von 5 Sekunden bis 3 Stunden.

15. Verfahren gemäß Anspruch 14, charakterisiert **dadurch**, dass in Schritt E) die Polymer-dispergierte Flüssigkristall-Zelle auf eine Temperatur im Bereich von 30°C bis 120°C, weiter bevorzugt von 75°C bis 90°C und noch weiter bevorzugt von 80°C bis 85°C erhitzt wird.

16. Verfahren gemäß Anspruch 15, charakterisiert **dadurch**, dass Schritt E) für eine Zeitdauer von 5 Sekunden bis 60 Minunten, bevorzugt für eine Zeitdauer von 10 Minuten bis 40 Minuten durchgeführt wird.

17. Verfahren gemäß einem der Ansprüche 13-16, charakterisiert **dadurch**, dass Schritte C) und D) in der Reihenfolge CD oder DC oder gleichzeitig miteinander erfolgen.

18. Verfahren gemäß einem der Ansprüche 13-17, charakterisiert **dadurch**, dass Schritt C) durchgeführt wird durch Entfernen des ersten Flüssigkristall-Materials von der porösen Polymer-Matrix mittels eines Prozesses ausgewählt aus Auswaschen, Saugen und Verdunsten; und Addieren des zweiten Flüssigkristall-Materials zu der porösen Polymer-Matrix mittels eines Prozesses ausgewählt aus Aufnehmen des zweiten Flüssigkristall-Materials in die poröse Polymer-Matrix, Fluten der porösen Polymer-Matrix mit dem zweiten Flüssigkristall-Material, Eintauchen der porösen Polymer-Matrix in das zweite Flüssigkristall-Material, Füllen der porösen Polymer-Matrix mit dem zweiten Flüssigkristall-Material mittels Kapillarkraft unter Vakuum, und Tropf-Gießen ("drop casting") des zweiten Flüssigkristall-Materials auf die poröse Polymermatrix.

19. Verfahren gemäß einem der Ansprüche 13-18, charakterisiert **dadurch**, dass das zweite Flüssigkristall-Material Farbstoff-dotiert ist.

20. Verfahren gemäß einem der Ansprüche 13-19, charakterisiert **dadurch**, dass die Polymer-dispergierte Flüssigkristall-Zelle eine durchlässige Zelle ist und sowohl das erste als auch das dritte Substrat transparent sind, wie z.B. Glas beschichtet mit einem transparenten leitfähigen Oxid (TCO), z.B. Indiumzinnoxid (ITO), Fluor-dotiertes Zinnoxid (FTO), Zinkoxid (ZnO).

21. Verfahren gemäß einem der Ansprüche 13-19, charakterisiert **dadurch**, dass die Polymer-dispergierte Flüssigkristall-Zelle eine reflektierende Zelle ist und das eine des ersten oder dritten Substrates reflektierend oder teilweise reflektierend ist, wie z.B. Glas beschichtet mit Metall, und dass das andere des ersten und dritten Substrates transparent ist.

22. Polymer-dispergiertes Flüssigkristall, hergestellt durch das Verfahren gemäß einem der Ansprüche 1-12.

23. Polymer-dispergierte Flüssigkristall-Zelle, hergestellt mittels des Verfahrens gemäß einem der Ansprüche 13-21.

24. Polymer-dispergierte Flüssigkristall-Zelle gemäß Anspruch 23, zusätzlich umfassend Abstandshalter, die zwischen dem ersten Substrat und dem dritten Substrat angeordnet sind, um das erste und dritte Substrat auseinander zu halten.

25. Polymer-dispergierte Flüssigkristall-Zelle gemäß Anspruch 24, wobei die Abstandshalter aus Polymer(en) oder Glas hergestellt sind.

26. Flüssigkristall-Display, enthaltend mindestens zwei Polymer-dispergierte Flüssigkristall-Zellen, wie in einem der Ansprüche 23-25 definiert.

27. Verwendung der Partikel, wie in einem der Ansprüche 1-12 definiert, zur Herstellung eines Polymer-dispergierten Flüssigkristalls, welches eine poröse Polymer-Matrix aufweist, die die Partikel darin eingebettet hat, wobei die Matrix Poren aufweist, welche mit einem Flüssigkristall-Material besetzt sind,
charakterisiert **dadurch**, dass die Partikel zu einer Zusammensetzung addiert werden, die ein Material enthält, welches zur Bildung eines Polymers in der Lage ist, wobei die Zusammensetzung weiterhin ein Flüssigkristall-Material enthält, und nach der Addition der Partikel die Zusammensetzung induziert wird, einen Polymer zu bilden, bevorzugt mittels Polymerisations-induzierter Phasentrennung (PIPS), thermisch induzierter Phasentrennung (TIPS) oder Lösungsmittel-induzierter Phasentrennung (SIPS), wobei weiter bevorzugt die Zusammensetzung induziert wird, sich Polymerisation zu unterziehen durch chemische Reaktion, noch weiter bevorzugt einer Polymerisation durch chemische Reaktion, welche photoinduziert ist,
wobei dabei das Polymer-dispergierte Flüssigkristall erhalten wird.

## Revendications

1. Procédé de préparation d'un cristal liquide dispersé dans un polymère, ledit procédé comprenant les étapes consistant :
a) à fournir, dans un ordre quelconque,
- des particules ayant une taille moyenne dans l'intervalle de 1 nm à 5 µm, et
- une composition contenant un matériau capable de former un polymère, ladite composition contenant de plus un premier matériau de cristal liquide,
b) à mélanger lesdites particules et ladite composition,
c) à induire ladite composition à former un polymère, de préférence par séparation de phase induite par polymérisation (PIPS), séparation de phase induite thermiquement (TIPS) ou séparation de phase induite par solvant (SIPS), encore mieux en induisant ladite composition à être soumise à une polymérisation par réaction chimique, bien mieux encore à une polymérisation par réaction chimique qui est photo-induite,
obtenant par là une matrice polymère poreuse présentant lesdites particules encastrées dans celle-ci, ladite matrice ayant de plus des pores qui sont occupés par ledit premier matériau de cristal liquide,
**caractérisé en ce que** lesdites particules sont électriquement non conductrices.

2. Procédé selon la revendication 1, dans lequel l'étape c) se fait par séparation de phase induite par polymérisation (PIPS) et ledit matériau capable de former un polymère comprend des précurseurs de polymère, de préférence des monomères et/ou des oligomères.

3. Procédé selon les revendications 1-2, **caractérisé en ce que** lesdites particules sont chimiquement inertes.

4. Procédé selon la revendication 3, **caractérisé en ce que** lesdites particules sont chimiquement inertes par rapport aux métaux, aux matériaux de cristaux liquides, aux polymères, aux colorants et aux oxydes conducteurs transparents.

5. Procédé selon la revendication 4, **caractérisé en ce que** lesdites particules sont chimiquement inertes par rapport aux métaux, aux matériaux de cristaux liquides, aux polymères, aux colorants et aux oxydes conducteurs transparents tels qu'ils sont rencontrés dans une cellule à cristaux liquides dispersés dans un polymère.

6. Procédé selon l'une quelconque des revendications précédentes, **caractérisé en ce que** lesdites particules sont des particules isolées.

7. Procédé selon la revendication 6, **caractérisé en ce que** lesdites particules présentent une taille moyenne dans l'intervalle de 1 nm à < 5 000 nm, encore mieux de 100 nm < 3 000 nm, bien mieux encore de 200 nm à 800 nm, et encore mieux dans l'intervalle des longueurs d'ondes de la lumière visible.

8. Procédé selon l'une quelconque des revendications 1-5, **caractérisé en ce que** lesdites particules sont des agrégats de particules.

9. Procédé selon la revendication 8, **caractérisé en ce que** lesdits agrégats de particules présentent une taille moyenne dans l'intervalle de 1 nm à < 5 000 nm, encore mieux de 100 nm < 3 000 nm, bien mieux encore de 200 nm à 800 nm et bien mieux encore dans l'intervalle des longueurs d'ondes de la lumière visible.

10. Procédé selon l'une quelconque des revendications précédentes, **caractérisé en ce que** lesdites particules sont constituées ou revêtues d'un matériau choisi parmi des polymères résistant à la chaleur choisis parmi une résine de silicone réticulée, un polystyrène réticulé, une résine acrylique réticulée, PMMA, une résine de mélamine-formaldéhyde, une résine de polyamide aromatique, une résine de polyimide, une résine de polyamide-imide, des polyesters réticulés, des polymères fluorés (par exemple TEFLON^{®}), des oxydes métalliques, tels que l'oxyde d'aluminium, le dioxyde de silicium, par exemple la silice, le verre, de préférence des billes de verre et un carbone, tel que le diamant.

11. Procédé selon la revendication 10, **caractérisé en ce que** lesdites particules sont constituées ou revêtues d'un polymère résistant à la chaleur choisi parmi une résine de silicone réticulée, un polystyrène réticulé, une résine acrylique réticulée, une résine de mélamine-formaldéhyde, une résine de polyamide aromatique, une résine de polyimide, une résine de polyamide-imide, un polyester réticulé, l'oxyde d'aluminium, le dioxyde de silicium, le diamant et des mélanges de quelconques des précédents.

12. Procédé selon l'une quelconque des revendications précédentes, **caractérisé en ce que** lesdites particules sont mélangées avec ladite composition dans l'étape b) à une concentration dans l'intervalle de 0,1 % en poids à 20 % en poids, de préférence de 1 % en poids à 10 % en poids, en faisant référence au poids de la composition.

13. Procédé de production d'une cellule à cristaux liquides dispersés dans un polymère, ledit procédé comprenant les étapes consistant :
A) à réaliser le procédé selon l'une quelconque des revendications 1-12 en plaçant le produit de l'étape b) entre un premier et un second substrat, et à réaliser l'étape c) pour obtenir une matrice polymère poreuse entre lesdits premier et second substrats, ladite matrice polymère poreuse présentant les particules encastrées dans celle-ci et ayant de plus des pores qui sont occupés par ledit premier matériau de cristal liquide,
B) à soulever ledit second substrat à partir d'une face de ladite matrice polymère poreuse,
C) à retirer ledit premier matériau de cristal liquide de ladite matrice polymère poreuse et à le remplacer par un second matériau de cristal liquide,
D) à placer un troisième substrat sur ladite face de ladite matrice polymère poreuse à partir de laquelle ledit second substrat a été soulevé dans l'étape B), obtenant par là une cellule à cristaux liquides dispersés dans un polymère.

14. Procédé selon la revendication 13 comprenant l'étape supplémentaire consistant :
E) à chauffer ladite cellule à cristaux liquides dispersés dans un polymère à une température dans l'intervalle de 30°C à 200°C sur une durée dans l'intervalle de 5 secondes à 3 heures.

15. Procédé selon la revendication 14, **caractérisé en ce que,** dans l'étape E), ladite cellule à cristaux liquides dispersés dans un polymère est chauffée à une température dans l'intervalle de 30°C à 120°C, encore mieux de préférence de 75°C à 90°C, et bien mieux encore de 80°C à 85°C.

16. Procédé selon la revendication 15, **caractérisé en ce que** l'étape E) est réalisée sur une durée de 5 secondes à 60 minutes, de préférence sur une durée de 10 minutes à 40 minutes.

17. Procédé selon l'une quelconque des revendications 13 à 16, **caractérisé en ce que** les étapes C) et D) se font dans l'ordre CD ou DC ou de manière concomitante l'une avec l'autre.

18. Procédé selon l'une quelconque des revendications 13-17, **caractérisé en ce que** l'étape C) est réalisée en éliminant ledit premier matériau de cristal liquide de ladite matrice polymère poreuse par un procédé choisi parmi le lavage, l'aspiration et l'évaporation, et en ajoutant ledit second matériau de cristal liquide à ladite matrice polymère poreuse par un procédé choisi parmi l'imbibition dudit second matériau de cristal liquide dans ladite matrice polymère poreuse, le noyage de ladite matrice polymère poreuse avec ledit second matériau de cristal liquide, l'immersion de ladite matrice polymère poreuse dans ledit second matériau de cristal liquide, le remplissage par force capillaire de ladite matrice polymère poreuse avec ledit second matériau de cristal liquide sous vide et la coulée goutte à goutte dudit second matériau de cristal liquide sur ladite matrice polymère poreuse.

19. Procédé selon l'une quelconque des revendications 13-18, **caractérisé en ce que** ledit second matériau de cristal liquide est dopé au colorant.

20. Procédé selon l'une quelconque des revendications 13-19, **caractérisé en ce que** ladite cellule à cristaux liquides dispersés dans un polymère est une cellule de transmission et à la fois lesdits premier et troisième substrats sont transparents, tels que du verre revêtu d'un oxyde conducteur transparent (TCO), par exemple l'oxyde d'indium et d'étain (ITO), l'oxyde d'étain dopé au fluor (FTO), l'oxyde de zinc (ZnO).

21. Procédé selon l'une quelconque des revendications 13-19, **caractérisé en ce que** ladite cellule à cristaux liquides dispersés dans un polymère est une cellule réflective et un desdits premier et troisième substrats est réflecteur ou partiellement réflecteur, tel que du verre revêtu d'un métal, et l'autre desdits premier et troisième substrats est transparent.

22. Cristal liquide dispersé dans un polymère préparé par le procédé selon l'une quelconque des revendications 1-12.

23. Cellule à cristaux liquides dispersés dans un polymère produite par le procédé selon l'une quelconque des revendications 13-21.

24. Cellule à cristaux liquides dispersés dans un polymère selon la revendication 23 comprenant de plus des éléments d'écartement disposés entre ledit premier substrat et ledit troisième substrat pour maintenir lesdits premier et troisième substrats éloignés.

25. Cellule à cristaux liquides dispersés dans un polymère selon la revendication 24, dans laquelle lesdits éléments d'écartement sont constitués de polymère(s) ou de verre.

26. Affichage à cristaux liquides contenant au moins deux cellules à cristaux liquides dispersés dans un polymère selon l'une quelconque des revendications 23-25.

27. Utilisation de particules selon l'une quelconque des revendications 1-12 pour la préparation d'un cristal liquide dispersé dans un polymère présentant une matrice polymère ou poreuse avec lesdites particules encastrées dans celle-ci, ladite matrice présentant des pores qui sont occupés par un matériau de cristal liquide, **caractérisée en ce que** lesdites particules sont ajoutées à une composition contenant un matériau capable de former un polymère, ladite composition contenant de plus un matériau de cristal liquide, et, après l'addition desdites particules, ladite composition est induite pour former un polymère, de préférence par séparation de phase induite par polymérisation (PIPS), séparation de phase induite thermiquement (TIPS) ou séparation de phase induite par solvant (SIPS), dans laquelle, ladite composition est encore mieux induite pour être soumise à une polymérisation par réaction chimique, bien mieux encore à une polymérisation par réaction chimique qui est photoinduite, obtenant par là ledit cristal liquide dispersé dans un polymère.
